(19) Europäisches Patentamt
European Patent Office
Office européen des brevets

(11) EP 0 329 595 B1

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(51) Int. Cl.[6]: **C07F 9/32**

(21) Anmeldenummer: **89710008.7**

(22) Anmeldetag: **10.02.1989**

(54) **Verfahren zur Herstellung von Alkenylphosphinsäurealkylestern**

Process for preparing alkyl esters of alkenylphosphinic acid

Procédé de préparation d'esters alkyliques d'acides alcényl phosphiniques

(84) Benannte Vertragsstaaten:
**BE CH DE FR GB IT LI NL**

(30) Priorität: **19.02.1988 DE 3805205**

(43) Veröffentlichungstag der Anmeldung:
**23.08.1989 Patentblatt 1989/34**

(73) Patentinhaber: **HOECHST AKTIENGESELLSCHAFT**
**D-65926 Frankfurt am Main (DE)**

(72) Erfinder:
- **Kleiner, Hans-Jerg, Dr.**
  **D-6242 Kronberg/Taunus (DE)**
- **Roscher, Günter, Dr.**
  **D-6233 Kelkheim (Taunus) (DE)**

(56) Entgegenhaltungen:
**EP-A- 0 032 663** **EP-A- 0 281 122**
**DE-A- 2 535 641**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.11.5/3.4

**Beschreibung**

Die Erfindung bezieht sich auf ein Verfahren zur Herstellung von Alkenylphosphinsäurealkylestern.

Alkenylphosphinsäureester sind wertvolle Zwischenprodukte. Beispielsweise hat man Alkenylalkylphosphinsäurealkylester mit 2,5-Dialkoxy-3,6-dihydro-1,4-pyrazinen umgesetzt und dabei weitgehend reine Enantiomere von (3-Amino-3-carboxypropyl)-alkyl-phosphinsäurederivaten erhalten (DE-OS 3 525 267). Durch Hydrolyse von Methylvinylphosphinsäurestern erhält man weiterhin Methylvinylphosphinsäure. Ihre Polymerisation führt zu Polyvinylmethylphosphinsäure, die als wasserlösliches saures Polymeres für die Praxis wertvolle Eigenschaften aufweist. So ist sie z.B. ein vorzügliches Mittel zur Behandlung von Trägermaterialien für Offsetdruckplatten (EP-OS 69 318 = US-PS 4 458 005).

Bisher sind verschiedene Verfahren bekannt geworden, Vinylphosphinsäureester herzustellen. Beispielsweise gelingt es, Phosphonsäureesterchloride in Tetrahydrofuran als Lösungsmittel mit Vinylmagnesiumchlorid umzusetzen. Dabei erhält man die Vinylphosphinsäureester; beispielsweise erhielt man nach diesem Verfahren den Methylvinylphosphinsäuremethylester in einer Ausbeute von 61 % d. Th. [N. Minowa et al, Tetrahedron Letters 24, 2391 (1983)]. Ein technisch leicht durchführbares Verfahren ist jedoch weiterhin sehr erwünscht, da die bisherigen Verfahren technisch nur schwierig durchführbar sind.

Aus der DE-OS 25 35 641 ist die Herstellung unter anderem von Vinylphosphinsäureestern aus Halogenalkylphosphinsäureestern durch Abspaltung von Halogenwasserstoff mittels Alkalien bekannt. Die Herstellung dieser Halogenalkylphosphinsäureester ist jedoch aufwendig; außerdem fällt bei diesem Verfahren eine erhebliche Salzfracht an, die zu entsorgen ist.

Es wurde nun überraschend gefunden, daß man Alkenylphosphinsäureester der allgemeinen Formel I (s. Patentanspruch 1), worin $R^1$ $CH_3$ oder vorzugsweise H, $R^2$ Phenyl oder Alkyl mit bis 1 bis 4, vorzugsweise 1 oder 2 C-Atomen insbesondere Methyl, und $R^3$ Alkyl mit 1 bis 8 C-Atomen bedeutet, dadurch herstellen kann, daß man 2-Acetoxyäthylphosphinsäurealkylester entsprechend der allgemeinen Formel II (s. Patentanspruch 1), worin $R^1$, $R^2$ und $R^3$ die oben angegebene Bedeutung haben, bei einem Partialdruck der Summe der Komponenten des Reaktionssystems zwischen 1 und 500 mbar, vorzugsweise zwischen 5 und 100 mbar, in Berührung mit einem flüssigen, katalytisch wirkenden Medium spaltet und die entstehenden Alkenylphosphinsäurealkylester der Formel I und andere flüchtige Reaktionsprodukte dampfförmig abzieht.

Es war bereits bekannt, nach dem Verfahren der
DE-OS 30 01 894 = US-PS 4 388 252
2-Acetoxyäthanphosphonsäuredialkylester in Gegenwart saurer oder basischer Katalysatoren bei 150-270°C unter Atmosphärendruck unter Abspaltung von Essigsäurealkylester in Gemische von Vinylphosphonsäurederivaten zu überführen, die neben Vinylphosphonsäuremonoalkylestern und mehreren anderen Produkten auch geringe Mengen (im Höchstfall 23 %) Vinylphosphonsäuredialkylester enthalten.

Demnach sollte bei der analogen Pyrolyse der 2-Acetoxyäthylphosphinsäurealkylester der Formel II ebenfalls nur eine geringe Ausbeute an den gewünschten Alkenylphosphinsäurealkylestern zu erwarten sein.

Überraschenderweise wird jedoch unter Abspaltung von Essigsäure statt von Essigsäureester als Hauptprodukt ein Alkenylphosphinsäureester der Formel I gebildet, also ein Vinylphosphinsäureester, wenn $R^1$ H ist.

Die als Ausgangsprodukte verwendeten 2-Acetoxyäthylphosphinsäureester der allgemeinen Formel II sind nach bekannten Verfahren leicht zugänglich. Sie sind insbesondere nach dem Verfahren der DE-PS 2 127 821 herstellbar, bei dem Vinylacetat bzw. Essigsäureisopropenylester radikalisch katalysiert an Phosphonigsäuremonoester angelagert werden.

Zwar kommt das vorliegende Verfahren in der Praxis insbesondere für die Herstellung der Ester mit Alkylgruppen von 1 bis 4 C-Atomen wie der Methyl-, Äthyl-, Propyl-, Isopropyl- und der verschiedenen Butylester in Betracht, jedoch können auch Ester mit Alkylgruppen von mehr als vier C-Atomen hergestellt werden wie die mit den verschiedenen Pentyl-, Hexyl-, Heptyl- und Octylgruppen. Im allgemeinen enthalten die erfindungsgemäß hergestellten Ester also Alkylgruppen mit nicht mehr als 8, vorzugsweise nicht mehr als 5 Kohlenstoffatomen. Als Beispiele seien folgende Ausgangsstoffe genannt: 2-Acetoxyäthyl-methyl-phosphinsäure-methyl-, -äthyl-, n-butyl-, -isobutyl-, -pentyl-, -isopentyl-, -hexylester; 2-Acetoxyäthyl-äthylphosphinsäuremethyl-, -äthyl- und n-butyl-ester; (2-Acetoxy-2-methyl-äthyl)-methyl-phosphinsäuremethyl-, -äthyl-, -n-butyl- und -isobutylester; 2-Acetoxyäthyl-phenyl-phosphinsäuremethyl-, -äthyl-, -n-butylester. Hieraus erhält man dann also den Methylvinylphosphinsäuremethyl-, -äthyl-, -n-butyl-, -isobutyl-, -pentyl-, -isopentyl-, und -hexyl-ester, den Äthylvinylphosphinsäuremethyl-, -äthyl- und -n-butylester; den (Methylvinyl)-methylphosphinsäuremethyl-, -äthyl-, n-butyl- und -isobutylester; den Phenylvinylphosphinsäuremethyl-, -äthyl- und n-butylester.

Verbindungen der Formel I, in denen $R^1$ Wasserstoff ist, $R^2$ für Alkyl mit 1 bis 4 Kohlenstoffatomen oder Phenyl steht und $R^3$ Isobutyl oder Alkyl mit 5 bis 8 Kohlenstoffatomen bedeutet, sind neu und ebenfalls Gegenstand der vorliegenden Erfindung.

Das erfindungsgemäße Verfahren wird im allgemeinen bei einer Temperatur von 150 bis 270, vorzugsweise von 180 bis 250°C durchgeführt.

Der Begriff "Partialdruck der Summe der Komponenten des Reaktionssystems" umfaßt sowohl den Druck des 2-Acetoxyäthylphosphinsäurealkylesters der Formel II als auch den der daraus gebildeten Reaktionsprodukte, die großenteils flüchtiger sind als das Ausgangsmaterial und insoweit aus dem Gemisch herausdestilliert werden können. Der genannte Druck, z. B. zwischen 10 und 100 mbar, läßt sich auf verschiedene Weisen einstellen. Nach einer Ausführungsform arbeitet man unter vermindertem Druck; nach einer anderen Arbeitsweise arbeitet man bei einem Druck von über 500 mbar, wobei die Differenz zwischen dem Gesamtdruck und dem gewünschten Partialdruck der Komponenten des Reaktionssystems durch ein gegenüber den Reaktionsteilnehmern unter den Reaktionsbedingungen inertes Gas erzeugt werden kann. Vorteilhaft beträgt bei dieser Ausführungsform der Gesamtdruck im Reaktionssystem 5 bis 500 mbar. Als solche inerten Gase kommen die in der Praxis üblichen in Frage, vor allem Stickstoff, gegebenenfalls aber auch Kohlendioxid oder leichte Kohlenwasserstoffe wie Methan oder Äthan, und in besonderen Fällen auch Edelgase wie Argon. Natürlich können auch Gemische verschiedener solcher Gase verwendet werden.

Als katalytisch wirkende Medien eignen sich die gleichen, die auch in der DE-OS 30 01 894 genannt werden, und zwar sowohl saure als auch basische. Als saure Medien eignen sich z.B. Schwefelsäure, Phosphorsäure, halogenhaltige Carbonsäuren wie Di- und Trichloressigsäure sowie Trifluoressigsäure, aromatische Sulfonsäuren wie Benzol- und p-Toluolsulfonsäure, Vinylphosphonsäure, Alkenylphosphinsäuren, vor allem aber Produkte, die aus den bei der vorliegenden Reaktion im Sumpf anfallenden, also höher siedenden, Nebenprodukten durch thermische Behandlung mit Wasser erhalten werden, wobei die Wasserbehandlung z.B. durch Kochen für die Dauer von 5 Minuten bis 2 Stunden erfolgen kann. Als basische Medien lassen sich z.B. tertiäre aliphatische und aromatische Amine und Phosphane (früher als Phosphine bezeichnet) verwenden, wie sie ebenfalls in großer Zahl in der DE-OS 30 01 894 genannt sind.

Das katalytisch wirkende Medium wird im allgemeinen in einer Menge von mindestens 0,1 Gew.-% angewandt, bezogen auf den durchgesetzten Acetoxyäthylphosphinsäurealkylester. Im Reaktionsgemisch ist die Konzentration naturgemäß wesentlich höher, da es als Reaktionsmedium wirkt. Im allgemeinen beträgt seine Menge 1-20 Gew.-%, wobei naturgemaß die Verwendung möglichst geringer Mengen, zweckmäßig nicht mehr als 5 Gew.-%, bezogen auf den durchgesetzten Acetoxyäthylphosphinsäurealkylester, bevorzugt ist. Andererseits, und dies gilt vor allem bei Verwendung der mit Wasser behandelten Nebenprodukte der erfindungsgemäßen Reaktion, kann man die katalytisch wirkenden Medien ohne Gefahr für die Durchführbarkeit der Reaktion auch in noch größeren Mengen als 20 Gew.-% anwenden. Der Begriff Gew.-% bezieht sich stets auf das Gewicht des Acetoxyäthylphosphinsäurealkylesters.

Das erfindungsgemäße Verfahren kann diskontinuierlich durchgeführt werden, mit besonderem Vorteil aber auch kontinuierlich, wobei man die entstehenden Spaltprodukte, insbesondere den Alkenylphosphinsäurealkylester, laufend aus der Reaktionsmischung herausdestilliert.

Die erfindungsgemäß hergestellten Alkenylphosphinsäurealkylester können, falls gewünscht, noch durch Destillation weiter gereinigt werden.

Die Erfindung wird durch folgende Beispiele erläutert.

**Beispiele:**

1) Die Versuchsanordnung bestand aus einem 0,5 l Rührkolben mit Tropftrichter und aufgesetzter Glaskolonne mit Vakuummantel (Innendurchmesser 29 mm, Länge 0,5 m, Füllung 6 mm Raschig-Ringe), automatischem Rücklaufteiler, Kondensator, Kältefalle, Vorlage, Vakuumpumpe.

In dem Rührkolben wurden 100 g Methylvinylphosphinsäure als Katalysator für die Spaltung vorgelegt. Unter Rühren wurde der Sumpf bei einem Druck von 10 mbar auf 200°C geheizt. Anschließend wurden aus dem Tropftrichter pro Stunde 70 g 2-Acetoxyäthylmethyl-phosphinsäureäthylester zugetropft. Bei einem Rücklaufverhältnis von 1 und einer Kopftemperatur in der Kolonne von 95-102°C fielen als Destillat und in der Kältefalle in der Summe pro Stunde 58 g Kondensat an. Das Gemisch enthielt 64 Gew.-% Methylvinylphosphinsäureäthylester und 25 % Essigsäure; der Rest bestand aus anderen Phosphinsäurederivaten und unbekannten Komponenten. Die errechnete Ausbeute an Methylvinylphosphinsäureester betrug 76 %.

2) In der in Beispiel 1 beschriebenen Versuchsapparatur wurde Vinylphosphonsäure als Katalysator für die Spaltung vorgelegt. Unter Rühren wurde der Sumpf bei einem Druck von ca. 10-15 mbar auf 205-210°C geheizt. Anschließend wurde 2-Acetoxyäthylmethyl-phosphinsäureisobutylester, dem einige Prozent Vinylphosphonsäure zugemischt wurden, zugetropft. Bei einem Rücklaufverhältnis von ca. 1 und einer Kopftemperatur von 55-64°C fielen ein Destillat und ein Sumpf an. Das Destillat bestand hauptsächlich aus Methylvinyl-phosphinsäureisobutylester, der nach weiterer Reinigung mit einem Kp 43°C/0,15 mbar und $n_D^{20}$ 1,4435 anfiel.

3) Arbeitete man analog Beispiel 1 und verwendete ein 2-Acetoxyäthylmethyl-phosphinsäureamylester-Gemisch (Amylkomponente n-pentyl und 2-methyl-butyl) als Ausgangsmaterial, so wurde ein Estergemisch erhalten, in dem die n-pentyl-Komponente zu 80 % und die 2-Methyl-butyl-Komponente zu etwa 20 % enthalten war. Charakteristika: Kp 75°C/0,4 mbar, $n_D^{20}$ = 1,4470.

## Patentansprüche

1. Verfahren zur Herstellung von Alkenylphosphinsäurealkylestern der allgemeinen Formel I

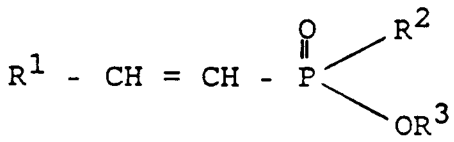

(I)

worin $R^1$ H oder $CH_3$, $R^2$ Alkyl mit 1 bis 4 C-Atomen oder Phenyl und $R^3$ Alkyl mit 1 bis 8 C-Atomen bedeutet, dadurch gekennzeichnet, daß man 2-Acetoxyäthylphosphinsäurealkylester der allgemeinen Formel

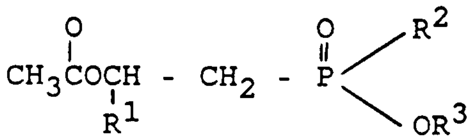

(II)

worin $R^1$, $R^2$ und $R^3$ die angegebene Bedeutung haben, bei einem Partialdruck der Summe der Komponenten des Reaktionssystems von 1 bis 500 mbar in Berührung mit einem flüssigen, katalytisch wirkenden Medium spaltet und die entstehenden Alkenylphosphinsäurealkylester und andere flüchtige Reaktionsprodukte dampfförmig abzieht.

2. Verfahren nach Anspruch 1, dadurch gekennzeichnet, daß man bei einem Gesamtdruck über 500 mbar arbeitet, wobei die Differenz zwischen dem Gesamtdruck und dem Partialdruck der Summe der Komponenten des Reaktionssystems durch ein gegenüber diesen unter den Reaktionsbedingungen inertes Gas erzeugt wird.

3. Verfahren nach Anspruch 1, dadurch gekennzeichnet, daß der Gesamtdruck im Reaktionssystem auf 5 bis 500 mbar eingestellt wird.

4. Verfahren nach einem oder mehreren der Ansprüche 1 bis 3, dadurch gekennzeichnet, daß der Partialdruck der Summe der Komponenten des Reaktionssystems zwischen 5 und 100 mbar liegt.

5. Verfahren nach einem oder mehreren der Ansprüche 1 bis 4, dadurch gekennzeichnet, daß bei einer Temperatur von 150 bis 270°C, vorzugsweise von 180 bis 250 °C gearbeitet wird.

6. Verfahren nach einem oder mehreren der Ansprüche 1 bis 5, dadurch gekennzeichnet, daß das katalytisch wirkende Medium in einer Menge von mindestens 0,1 und vorzugsweise in einer Menge von 1 bis 20 %, insbesondere bis 5 %, verwendet wird, bezogen auf das Gewicht des durchgesetzten Acetoxyäthylphosphinsäurealkylesters.

7. Verfahren nach einem oder mehreren der Ansprüche 1 bis 6, dadurch gekennzeichnet, daß als katalytisch wirkendes Medium ein saures Medium verwendet wird.

8. Verfahren nach Anspruch 7, dadurch gekennzeichnet, daß als saures Medium ein Produktgemisch eingesetzt wird, das bei dem erfindungsgemäßen Verfahren als höhersiedendes Nebenprodukt gebildet wird und das danach in der Hitze mit Wasser behandelt worden ist, wobei die Hitzebehandlung vorzugsweise durch Kochen mit Wasser während 5 Minuten bis 2 Stunden erfolgt.

9. Verfahren nach einem oder mehreren der Ansprüche 1 bis 8, dadurch gekennzeichnet, daß die Spaltprodukte kontinuierlich aus der Reaktionszone abgeführt werden.

10. Verfahren nach einem oder mehreren der Ansprüche 1 bis 9, dadurch gekennzeichnet, daß in den Formeln (I) und (II) $R^1$ Wasserstoff, $R^2$ Alkyl mit 1 bis 2 C-Atomen, vorzugsweise Methyl, und $R^3$ Alkyl mit 1 bis 5, vorzugsweise 1 bis 4 C-Atomen, ist.

**11.** Verbindungen der Formel (I)

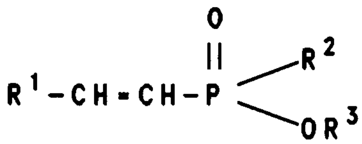

(I)

worin
$R^1$ H, $R^2$ Alkyl mit 1 bis 4 C-Atomen oder Phenyl und $R^3$ Isobutyl oder Alkyl mit 5 bis 8 C-Atomen bedeutet.

**12.** Verbindungen nach Anspruch 11, dadurch gekennzeichnet, daß $R^1$ Wasserstoff, $R^2$ Alkyl mit 1 bis 2 C-Atomen, vorzugsweise Methyl, und $R^3$ Isobutyl oder Alkyl mit 5 C-Atomen ist.

## Claims

**1.** A process for the preparation of alkyl alkenylphosphinates of the formula I,

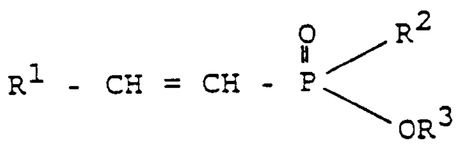

(I)

in which $R^1$ is H or $CH_3$, $R^2$ is alkyl having from 1 to 4 carbon atoms or phenyl and $R^3$ is alkyl having from 1 to 8 carbon atoms which comprises cleaving alkyl 2-acetoxyethanephosphinates of the formula

(II)

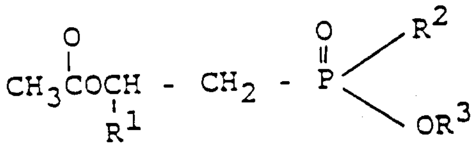

in which $R^1$ $R^2$ and $R^3$ are as defined above, at a partial pressure of the sum of the components of the reaction system of 1 to 500 mbar in contact with a liquid medium having a catalytic action and removing the resulting alkyl alkenylphosphinates and other volatile reaction products in the form of vapor.

**2.** The process as claimed in claim 1, wherein the reaction is carried out at a total pressure above 500 mbar, the difference between the total pressure and the partial pressure of the sum of the components of the reaction system being provided by a gas inert toward them under the reaction conditions.

**3.** The process as claimed in claim 1, wherein the total pressure in the reaction system is set to 5 to 500 mbar.

**4.** The process as claimed in one or more of claims 1 to 3, wherein the partial pressure of the sum of the components of the reaction system is between 5 and 100 mbar.

**5.** The process as claimed in one or more of claims 1 to 4, wherein the reaction is carried out at a temperature of 150 to 270°C, preferably of 180 to 250°C.

**6.** The process as claimed in one or more of claims 1 to 5, wherein the medium having a catalytic action is used in an amount of at least 0.1 and preferably in an amount of 1 to 20 %, in particular up to 5 %, relative to the weight of the alkyl acetoxyethanephosphinate put through.

**7.** The process as claimed in one or more of claims 1 to 6, wherein an acidic medium is used as the medium having a catalytic action.

**8.** The process as claimed in claim 7, wherein the acidic medium used is a product mixture which is formed in the process according to the invention as higher-boiling byproduct and has then been treated at elevated temperature with water.

**9.** The process as claimed in one or more of claims 1 to 8, wherein the cleavage products are continuously removed from the reaction zone.

**10.** The process as claimed in one or more of claims 1 to 9, wherein, in the formulae (I) and (II) $R^1$ is hydrogen, $R^2$ is alkyl having 1 or 2 carbon atoms, preferably methyl, and $R^3$ is alkyl having from 1 to 5, preferably from 1 to 4, carbon atoms.

**11.** A compound of the formula (I)

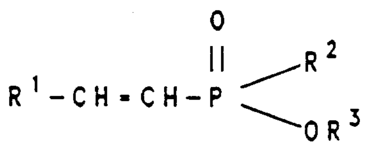

(I)

in which
$R^1$ is H, $R^2$ is alkyl having from 1 to 4 carbon atoms or phenyl and $R^3$ is isobutyl or alkyl having from 5 to 8 carbon atoms.

**12.** The compound as claimed in claim 11, wherein $R^1$ is hydrogen, $R^2$ is alkyl having from 1 to 2 carbon atoms, preferably methyl, and $R^3$ is isobutyl or alkyl having 5 carbon atoms.

**Revendications**

**1.** Procédé de préparation d'esters alkyliques d'acides alcénylphosphiniques de formule générale I

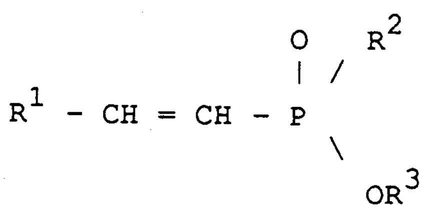

(I)

dans laquelle $R^1$ est H ou $CH_3$, $R^2$ est un radical alkyle ayant de 1 à 4 atomes de carbone ou phényle, et $R^3$ est un radical alkyle ayant de 1 à 8 atomes de carbone, caractérisé en ce qu'on dissocie par contact avec une substance liquide à effet catalytique des esters alkyliques de l'acide 2-acétoxyéthylphosphinique de formule générale

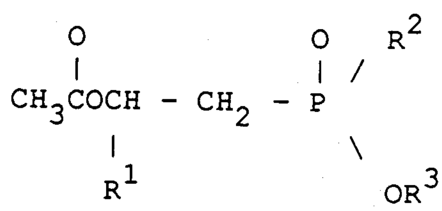

(II)

dans laquelle $R^1$, $R^2$ et $R^3$ ont les significations données, sous une pression partielle de la somme des constituants du système réactionnel de 1 à 500 mbar, les esters alkyliques des acides alcénylphosphiniques formés et les autres produits de réaction volatils étant soutirés sous forme vapeur.

**2.** Procédé selon la revendication 1, caractérisé en ce qu'on travaille sous une pression totale supérieure à 500 mbar, la différence entre la pression totale et la pression partielle de la somme des constituants du système réactionnel étant produite par un gaz inerte vis-à-vis de ces derniers dans les conditions de la réaction.

**3.** Procédé selon la revendication 1, caractérisé en ce que la pression totale dans le système réactionnel est ajustée à une valeur de 5 à 500 mbar.

**4.** Procédé selon l'une ou plusieurs des revendications 1 à 3, caractérisé en ce que la pression partielle de la somme des constituants du système réactionnel est comprise entre 5 et 100 mbar.

**5.** Procédé selon l'une ou plusieurs des revendications 1 à 4, caractérisé en ce qu'on travaille à une température de 150 à 270°C et de préférence de 180 à 250°C.

**6.** Procédé selon l'une ou plusieurs des revendications 1 à 5, caractérisé en ce que le milieu à effet catalytique est utilisée en une quantité d'au moins 0,1 et de préférence en une quantité de 1 à 20 %, en particulier allant jusqu'à 5 %, par rapport au poids de l'ester alkylique de l'acide acétoxyéthylphosphinique utilisé.

**7.** Procédé selon l'une ou plusieurs des revendications 1 à 6, caractérisé en ce qu'on utilise comme milieu à effet catalytique un milieu acide.

**8.** Procédé selon la revendication 7, caractérisé en ce qu'on utilise comme milieu acide un mélange de produits qui est formé, dans le procédé selon l'invention, sous forme d'un sous-produit à haut point d'ébullition, et qui ensuite est traité à chaud avec de l'eau, le traitement thermique étant de préférence réalisé par ébullition avec de l'eau pendant 5 minutes à 2 heures.

**9.** Procédé selon l'une ou plusieurs des revendications 1 à 8, caractérisé en ce que les produits de dissociation sont évacués en continu de la zone réactionnelle.

**10.** Procédé selon l'une ou plusieurs des revendications 1 à 9, caractérisé en ce que, dans les formules (I) et (II), $R^1$ est un hydrogène, $R^2$ est un radical alkyle ayant 1 ou 2 atomes de carbone, de préférence le radical méthyle, et $R^3$ est un radical alkyle ayant de 1 à 5 et de préférence de 1 à 4 atomes de carbone.

**11.** Composés de formule (I)

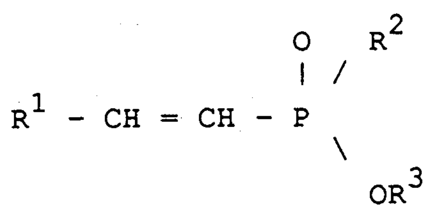

(I)

dans laquelle $R^1$ est H, $R^2$ est un radical alkyle ayant de 1 à 4 atomes de carbone ou phényle, et $R^3$ est un radical isobutyle ou alkyle ayant de 5 à 8 atomes de carbone.

**12.** Composés selon la revendication 11, caractérisés en ce que $R^1$ est un hydrogène, $R^2$ est un radical alkyle ayant 1 ou 2 atomes de carbone, de préférence le radical méthyle, et $R^3$ est un radical isobutyle ou alkyle ayant 5 atomes de carbone.